# EUROPEAN PATENT SPECIFICATION

(11) **EP 0 908 791 B1**
(45) Date of publication and mention of the grant of the patent: **23.07.2003**
(21) Application number: 98307186.1
(22) Date of filing: 07.09.1998
(51) Int. Cl.: G03G 15/01, H04N 1/053

(54) **Subpixel misregistration correction by means of ros rephasing a multiphase image on an image color printer**
Unterpixel-Korrektur von Fehlüberdeckungen mittels eines Rasterausgabeabtasters zur Wiedereinphasung eines mehrphasigen Bildes in einem Farbdrucker
Correction inférieure au pixel d'une fausse registration par le dispositif de balayage de trames au moyen du rephasage des images multiphases dans l'imprimante électrophotographique en couleur

(30) Priority: 26.09.1997 US 938797
(43) Date of publication of application: 14.04.1999
(73) Proprietor: XEROX CORPORATION, Rochester, New York 14644 (US)
(72) Inventor: Lacayo, Orlando J., Rochester, New York 14607 (US); Lofthus, Robert M., Honeoye Falls, New York 14472 (US); Costanza, Daniel W., Rochester, New York 14580 (US)
(74) Representative: Skone James, Robert Edmund

(56) References cited:
- EP-A- 0 651 552
- US-A- 5 381 165

## Description

This invention relates generally to a raster output scanning system for producing a high intensity imaging beam which scans across a rotating polygon to a movable photoconductive member to record electrostatic latent images thereon, and, more particularly, to correction of Start of Scan signal and polygon phase differences.

In recent years, laser printers have been increasingly utilized to produce output copies from input video data representing original image information. The printer typically uses a Raster Output Scanner (ROS) to expose the charged portions of the photoconductive member to record an electrostatic latent image thereon. Generally, a ROS has a laser for generating a collimated beam of monochromatic radiation. The laser beam is modulated in conformance with the image information. The modulated beam is reflected through a lens onto a scanning element, typically a rotating polygon having mirrored facets.

The light beam is reflected from a facet and thereafter focused to a "spot" on the photosensitive member. The rotation of the polygon causes the spot to scan across the photoconductive member in a fast scan (i.e., line scan) direction. Meanwhile, the photoconductive member is advanced relatively more slowly than the rate of the fast scan in a slow scan (process) direction which is orthogonal to the fast scan direction. In this way, the beam scans the recording medium in a raster scanning pattern. The light beam is intensity-modulated in accordance with an input image serial data stream at a rate such that individual picture elements ("pixels") of the image represented by the data stream are exposed on the photosensitive medium to form a latent image, which is then transferred to an appropriate image receiving medium such as paper. Laser color printers may operate in either a single pass or multiple pass system.

In a multiple pass system, each image area on the photoreceptor surface must make at least three revolutions (passes) relative to the transverse scanline formed by the modulated laser beam generated by a ROS system. With respect to meeting customer requirements relating to visual perception, it is necessary to register the lead edges of all color separations within specified tolerances, e.g., ±0.015mm. Various techniques for multiple image registration are known in the prior art. For example, U.S. Pat. No. 5,208,796 discloses a technique wherein targets on a photoconductor belt are used for the detection of lateral belt displacement to control the transverse location of exposure scan.

In a color printer the alignment of the lead edge of the color image is made difficult if a Raster Output Scanner (ROS) is used to expose the photoreceptor (PR). Typically as the PR travels into the position where the first scanline is to be imaged, it is sensed by a hole sensor detecting a hole in the belt. It is desired to image the first scanline immediately when this occurs and to repeat this for all four colors to achieve perfect lead edge color registration. However, because of the scanning nature of the ROS imaging, the ROS spot, more than likely will not be at the SOS (start of scan) position as the PR hole arrives at the hole sensor. If this is the case, the system must wait until the next scanline crosses the SOS sensor to begin imaging. During this delay, the PR will have travelled and the first scan will be misregistered by a maximum of one full pixel or for a 600 spi ROS, over 40 microns.

A typical prior art registration technique is disclosed in U.S. Patent No. 5,381,165 showing registration by a feedback loop in which the phase and frequency of SOS signals and a reference signal are compared to produce an error signal representing frequency differences between rotating polygons associated with each Raster Output Scanner in a system of multiple raster output scanners. In this patent, a means to accomplish lead edge registration for color separations in a single pass architecture is demonstrated that addresses the following three error sources: (1) ROS Motor Polygon Assembly speed variations; (2) photoreceptor speed variations; (3) changes in the spacing between successive ROS units. In particular, the problem of correcting for spacing between successive ROS units, when the spacing between those units is not an integer multiple of the basic pixel size, is addressed in detail.

In a color printer possessing a multiple pass architecture, a single ROS is used to write all color separations. Assuming a Motor Polygon Assembly ROS, plus adequate DC velocity speed regulation for both the ROS and p/r subsystems, lead edge misregistration of one color relative to another will still occur because the distance around the belt is not in general an integer multiple of the basic pixel size. Note that this is exactly the case for the single pass architecture discussed above in the review of U.S. Patent No. 5,381,165, except that in the case of a multipass system, the 'spacing between successive ROS units' is the entire distance travelled back to the same, single ROS, i.e. the length of the p/r belt ( or circumference of the p/r drum).

In accordance with the present invention, a method of re-phasing the relationship of the beginning of a scanline and a rotating polygon in an imaging system having a raster output scanner including a rotating polygon for forming multiple superimposed images on a photoconductive member and a sensor for detecting the beginning of a scanline comprises sensing a photoconductive member indicator in the form of a hole (Tₙ) in the photoconductive member for registering images on the photoconductive member,
detecting the beginning of a scanline and providing a start of scan (SOS) signal representing the detection,
determining the relative phase between the start of scan signals and the detection of said indicator, and
changing the speed of the rotating polygon to synchronize the phase of said indicator with the lead edge of said SOS signals, and is characterised in that the step of determining the relative phase between the start of scan signals and the detection of said indicator includes the step of determining the phase between the lead edge of the indicator and a next occurring rising edge of the start of scan signals.

The present invention enables the registration of lead edges of color images in the process direction in a color printer utilizing a single Motor Polygon Assembly ROS imager within a multipass architecture.

For a better understanding of the present invention, reference may be had to the accompanying drawings wherein the same reference numerals have been applied to like parts and wherein:
Figure 1 shows a typical multi-pass ROS color printing system incorporating an example of the present invention;
Figure 2 illustrates a timing diagram for re-phasing; and,
Figure 3 illustrates the geometric relationship of re-phasing elements in one embodiment.

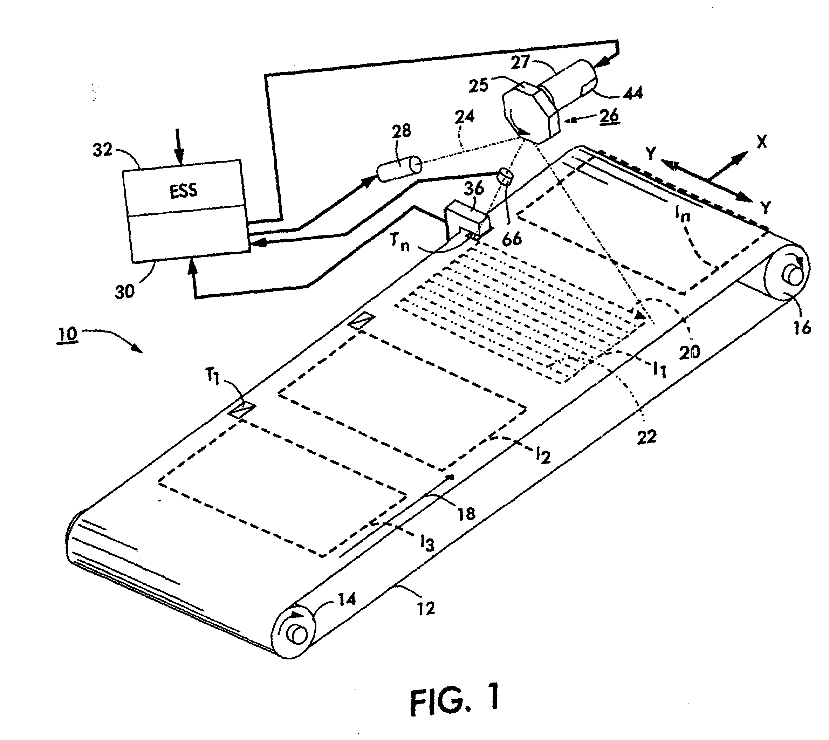

In Figure 1 of the drawings, an embodiment of the present invention is incorporated in a multi-pass xerographic printing system depicted schematically and designated generally by reference numeral 10. The system 10 includes a photoreceptive belt entrained about guide rollers 14 and 16, at least one of which is driven to advance the belt 12 in a longitudinal direction of processing travel depicted by the arrow 18. The length of the belt 12 is designed to accept an integral number of spaced image areas l₁ - lₙ represented by dashed line rectangles in Figure 1. As each of the image areas l₁ - lₙ reaches a transverse line of scan, represented by a dashed arrow 20, it is progressively exposed on closely spaced transverse raster lines 22 shown with exaggerated longitudinal spacing on the image area l₁ in Figure 1.

In the embodiment depicted in Figure 1, the line 20 is scanned by a raster output scanner so that a modulated laser beam 24 is reflected to the line 20 by successive facets 25 on a rotatable polygon-shaped mirror 26. The beam 24 is emitted by a laser device 28 such as a laser diode, operated by a laser drive module forming part of a control processor generally designated by the reference numeral 30. The processor 30 includes other not shown circuit or logic modules such as a scanner drive command circuit, by which operation of motor 27 for rotating the polygon mirror 26 is controlled. A start of scan (SOS) sensor, shown at 66, determines a start of scan reference point and also provides suitable feedback signals to control 30.

In the operation of the system 10, as thus far described, the control 30 responds to a video signal to expose each raster line 22 to a linear segment of the video signal image. In xerographic color systems, each image area l₁ . l_{n,} must be exposed in the same manner to four successive exposures, one for each of the three basic colors and black. In a multi-pass system such as the system 10, where only one raster output scanner or head is used, complete exposure of each image area requires four revolutions of the belt 12.

The image areas l₁ - lₙ are successively exposed on successive raster lines 22 as each raster line registers with a transverse scanline 20 as a result of longitudinal movement of the belt 12.

It is to be noted that the length of the transverse scanline 20 in system 10 is longer than the transverse dimension of the image areas l. Scanline length, in this respect, is determined by the length of each mirror facet 25 and exceeds the length of the raster lines 22. The length of each raster line is determined by the time during which the laser diode is active to reflect a modulated beam from each facet 25 on the rotating polygon 26 as determined by the laser drive module. Thus, the active portion of each transverse scanline may be shifted in a transverse direction by control of the laser drive module and the transverse position of the exposed raster lines 22, and image areas l₁ . l_{n,} shifted in relation to the belt 12.

Adjustment of the active portion of the transverse scanline 20 for each succeeding image is needed to assure precise longitudinal alignment or transverse registration of the succeeding images with the first image irrespective of the lateral position of the belt during exposure of the images. This operation is achieved in substantial measure by the provision of targets aligned in the direction of belt travel and of a design to facilitate generation of a signal corresponding to the location of each target. In particular, the multi-pass system of Figure 1, targets T₁ - Tₙ are located along a marginal edge of the belt 12 to be aligned in a longitudinal direction and are spaced to be located slightly ahead of each image areas l_{1 -} lₙ or upstream from each such area in the context of belt travel. A single sensor 36 is located to be aligned with targets T₁ - Tₙ for the image area passing the transverse scanline 20 in Figure 1.

Downstream from the exposure station, a development station (not shown) develops the latent image formed in the preceding image area. After the last color exposure, a fully developed color image is then transferred to an output sheet. An Electronic Sub System (ESS) 32 contains the circuit and logic modules which respond to input video data signals and other control and timing signals, to drive the photoreceptor belt 17 synchronously with the image exposure and to control the rotation of the polygon by the motor. For further details, reference is made to U.S. Patents 5,381,165 and 5,208,796.

As illustrated any suitable marker on the photoconductive surface or belt or any suitable hole, such as targets T₁ - Tₙ, provides a reference for each projected image on the belt surface. In other words, the detection by sensor of a mark or hole in the photoconductive surface establishes the first scanline of the projected image and in a multi pass image on image system, helps to establish image on image registration. In addition, the start of scan signals indicate the scanning laser beam to be at a start of scan position with reference to the photoconductive surface.

Generally, in the prior art, with a polygon of eight facets, the detected start of scan signal for each of eight facets on a polygon are used to inject a phase shift into the polygon motor. In particular, a polygon controller monitors the SOS signals from each of the facets, as the polygon rotates, to either speed up or slow down the rotating polygon to maintain uniform rotation. Thus there is a closed loop control from the SOS detector to maintain a uniform speed of rotation of the polygon. It is well known that the individual facets to a polygon, because of fabrication tolerances, are not all similar. The facets are different in degree of flatness or off center, and there is a non uniformity of the scanning beam reflected on to the photoconductive belt due to this non uniformity.

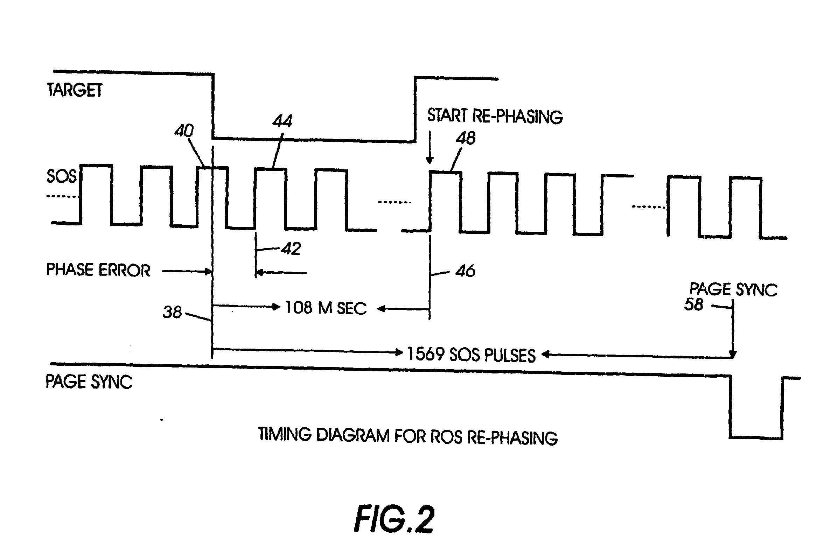

In accordance with the present invention, Figure 2 describes the measurement technique. The microprocessor measures the phase error, converts the raw time information to velocity information and commands the motor to make up the position based on the size of the phase error measured. To insure immunity to noise in the pitch hole signal, filtering is done in software.

The geometry of the PR belt will determine if polygon assembly re-phasing is done immediately after a pitch hole is received. In one embodiment, phase correction starts 108 milliseconds after the pitch hole is received. This is done to avoid disturbing the polygon assembly speed while an image is being exposed. In general, the position of the pitch holes with respect to the PR belt seam and the distance of the pitch hole sensor to the imaging backing bar would be designed to enable phasing to start immediately to minimize the amount of photoreceptor travel before imaging starts.

There is an absolute distance measured in number of SOS pulses, counted by the microprocessor, after which a Page Sync is issued. The Page Sync signal is generated by the same microprocessor used to control the speed of the polygon assembly. This new technique of generating Page Sync (i.e. by the polygon assembly controller), minimizes possible sources of error due to timing differences among different electronic circuits (i.e. imaging board) and reduces cost by simplifying the interface required among those components. Page Sync instructs the imaging electronics to start imaging in the next SOS rising edge.

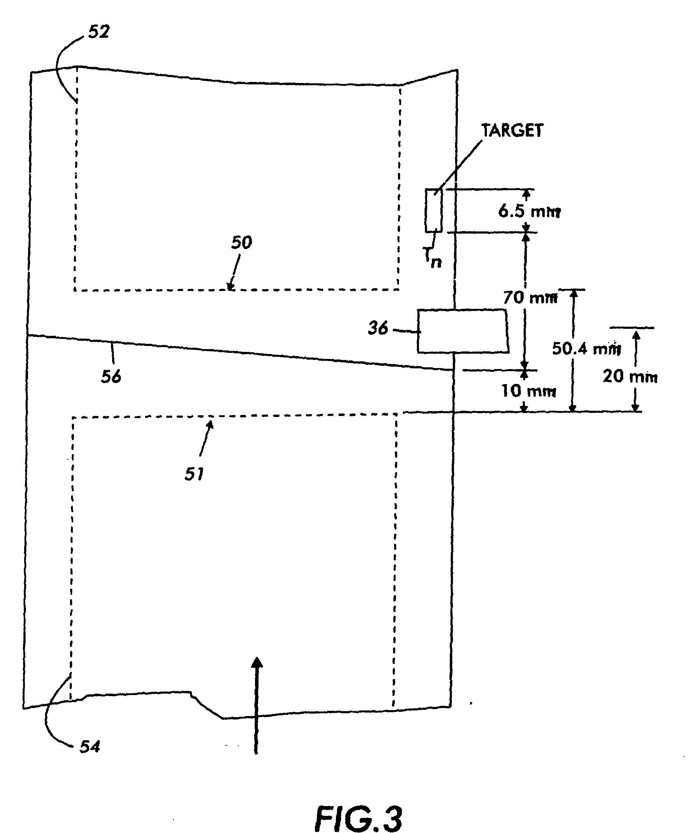

The intercopy gap and process speed are important parameters, since they determine the total amount of time available to complete re-phasing of the motor. For example, in one embodiment, that amount was 270 milliseconds. As an example, Figure 3 depicts the PR belt dimensions that were used in a test machine to calculate time to issue Page Sync and the delay time before re-phase of the motor could start.

With reference to Figure 2, there is shown a timing diagram for Raster Output Scanning (ROS) re-phasing. In particular, the top signal represents a photoconductive marker or target, in particular, a pitch hole. Underneath the target signal is a sequence of start of scan (SOS) signals with line 38 illustrating the lead edge of the target signal at an arbitrary point out of sync with the SOS signal 40. A phase error is illustrated as the period from the occurrence from the lead edge of the target signal shown at 38 to the lead edge of the next SOS signal 44 shown by line 42. Re-phasing of the SOS signal begins at some arbitrary SOS signal shown at 48 and illustrated at line 46. Re-phasing will be accomplished by suitable change of speed of the motor driving the rotating polygon 26 to eliminate the phase error to effectively cause the lead edge of the SOS signals to correspond to the lead edge of the target signal.

Re-phasing is initiated at arbitrary line 46 corresponding to the beginning of the intergap zone between successive images on the photoconductor as illustrated by arrows 50 and 51 in Figure 3 between image 52 and image 54. As shown in Figure 3, the target or photoconductor marker Tₙ is sensed prior to the completion of image 52 on the photoconductor and the sensor 36 is located in the intergap or interdocument region. Seam 56 represents a belt seam of the photoconductor which must be accommodated in the intergap region in order not to interfere with the image in the image areas. Again with reference to Figure 2, in one embodiment there is a 108 millisecond differential between the detection of the pitch hole or target at line 38 until the start re-phasing operations illustrated at line 46. This is the delay needed before re-phasing to allow the completion of the image 52 on the photoconductor as shown in Figure 3 and the beginning of the intergap region. The re-phasing is completed within this intergap region and is illustrated in Figure 2 by the Page Sync signal 58. This signal determines a begin print operation corresponding to the SOS signals in sync with the lead edge of the detected target signal. In one embodiment, the Page Sync signal occurs 1,569 SOS pulses from line 38 as shown in Figure 2.

Figure 3, likewise, illustrates various distances in millimetres in one embodiment of the present invention. For example, as shown there are 6.5 millimetres for the detection of the target or hole T_{n,} a distance of 70 millimetres from the end of the target to the seam 56 location, and 10 millimetres from the detection of the seam 56 to the beginning scan of image 54. Also, there is a distance of 50.4 millimetres from the end of image 52 to the beginning of image 54. In other words, this is the intergap distance. Also there is a distance of 20 millimetres from the sensor 36 to the beginning of image 54. It should be noted that various distance and locations are arbitrary and it is well within the scope of the present invention to position the target or holes on the photoreceptor at various locations with respect to images 52 and 54 as well as the location of the sensor 36. The essence of the invention is to suitably detect the target or pitch holes on the photoconductor, determine the phase relationship or phase error with respect to the start of scan signals, and change the speed of rotation of the rotating polygon to bring the phase of the SOS signals into sync with the target or pitch holes at the time the next succeeding image such as image 54 is scanned onto the photoconductor. The delays in re-phasing as illustrated allow a current image to be completed before the rephase operation begins.

## Claims

1. A method of re-phasing the relationship of the beginning of a scanline and a rotating polygon (26) in an imaging system having a raster output scanner including a rotating polygon for forming multiple superimposed images on a photoconductive member and a sensor for detecting the beginning of a scanline, the method comprising the steps of:
sensing a photoconductive member indicator in the form of a hole (Tₙ) in the photoconductive member for registering images on the photoconductive member,
detecting the beginning of a scanline and providing a start of scan (SOS) signal representing the detection,
determining the relative phase between the start of scan signals and the detection of said indicator, and
changing the speed of the rotating polygon (26) to synchronize the phase of said indicator with the lead edge of said SOS signals, **characterised in that** the step of determining the relative phase between the start of scan signals and the detection of said indicator includes the step of determining the phase between the lead edge of the indicator and a next occurring rising edge of the start of scan signals.

2. The method of claim 1, wherein the imaging system provides multiple sequential images on the photoconductive member (22) with a space between sequential images, and including the step of changing the speed of the rotating polygon (26) to synchronize the phase of said indicator with the lead edge of said SOS signals within said image space.

3. The method of claim 1 or claim 2, including the step of determining the relative phase between the lead edge of the start of scan signals and the detection of said indicator which occurs prior to said image space.

4. The method of any of claims 1 to 3, wherein the timing of changing of the speed of the rotating polygon (26) is dependent upon one of
a) the size of the indicator;
b) the distance from the indicator to a next sequential image; and,
c) the distance from the indicator to a photoconductive member seam (56).

5. The method of any of the preceding claims, further including the step of stamping in a memory the time between occurrence of the lead edge of the indicator and a next occurring rising edge of the start of scan signals.

## Patentansprüche

1. Verfahren zum Wiedereinphasen der Beziehung zwischen dem Beginn einer Abtastzeile und eines Rotationspolygons (26) in einem Abbildungssystem, das einen Rasterausgabescanner einschließlich eines Rotationspolygons zum Ausbilden mehrere sich überlagernder Abbildungen auf einem fotoleitfähigen Element und einen Sensor zum Erfassen des Beginns einer Abtastzeile enthält, wobei das Verfahren folgende Schritte beinhaltet:
Erfassen eines Kennzeichens für ein fotoleitfähiges Element in Gestalt eines Loches (Tₙ) im fotoleitfähigen Element zum Ausrichten von Abbildungen auf dem fotoleitfähigen Element,
Erfassen des Beginns einer Abtastzeile und Erzeugen eines Abtaststart-(SOS-) Signals, das die Erfassung repräsentiert,
Ermitteln der relativen Phase zwischen dem Start der Abtaststartsignale und der Erfassung des Kennzeichens, und
Ändern der Geschwindigkeit des Rotationspolygons (26), um die Phase des Kennzeichens mit der vorderen Flanke des SOS-Signals zu synchronisieren, **dadurch gekennzeichnet, daß** der Schritt zum Ermitteln der relativen Phase zwischen den Abtaststartsignalen und der Erfassung des Kennzeichens den Schritt zum Ermitteln der Phase zwischen der vorderen Rand des Kennzeichens und der nächsten auftretenden ansteigenden Flanke der Abtaststartsignale enthält.

2. Verfahren nach Anspruch 1, bei dem das Abtastsystem mehrere aufeinanderfolgende Abbildungen auf dem fotoleitfähigen Element (22) mit einem Zwischenraum zwischen aufeinanderfolgenden Abbildungen erzeugt, und das den Schritt des Änderns der Geschwindigkeit des Rotationspolygons (26) enthält, um die Phase des Kennzeichens mit der vorderen Flanke des SOS-Signals innerhalb des Abbildungszwischenraumes zu synchronisieren.

3. Verfahren nach Anspruch 1 oder 2, enthaltend den Schritt des Ermittelns der relativen Phase zwischen der vorderen Flanke der Abtaststartsignale und des Erfassens des Kennzeichens, das vor dem Abbildungszwischenraum erscheint.

4. Verfahren nach einem der Ansprüche 1 bis 3, bei dem die Zeitabstimmung der Änderung der Geschwindigkeit des Rotationspolygons (26) abhängig ist von einem der folgenden Faktoren:
a) Größe des Kennzeichens;
b) Abstand vom Kennzeichen zu einer nächsten nachfolgenden Abbildung; und
c) Abstand vom Kennzeichen zu einer Naht (56) des fotoleitfähigen Elementes.

5. Verfahren nach einem der vorhergehenden Ansprüche, weiterhin enthaltend den Schritt des Markierens in einem Speicher des Zeitpunktes zwischen dem Erscheinen des vorderen Randes des Kennzeichens und dem Erscheinen der ansteigenden Flanke der Abtaststartsignale.

## Revendications

1. Procédé de remise en phase de la relation du début d'une ligne de balayage et d'un polygone tournant (26) dans un système de formation d'image comportant un dispositif de sortie à échantillonnage récurrent comprenant un polygone tournant destiné à former de multiples images superposées sur un élément photoconducteur et un capteur destiné à détecter le début d'une ligne de balayage, le procédé comprenant les étapes consistant à :
détecter un indicateur d'élément photoconducteur sous la forme d'un trou (Tₙ) dans l'élément photoconducteur en vue de cadrer des images sur l'élément photoconducteur,
détecter le début d'une ligne de balayage et fournir un signal de début de balayage (SOS) représentant la détection,
déterminer la phase relative entre les signaux de début de balayage et la détection dudit indicateur, et
modifier la vitesse du polygone tournant (26) pour synchroniser la phase dudit indicateur au front avant desdits signaux de début de balayage (SOS), **caractérisé en ce que** l'étape de détermination de la phase relative entre les signaux de début de balayage et la détection dudit indicateur comprend l'étape de détermination de la phase entre le front avant de l'indicateur et un front montant apparaissant ensuite des signaux de début de balayage.

2. Procédé selon la revendication 1, dans lequel le système de formation d'image fournit de multiples images séquentielles sur l'élément photoconducteur (22) avec un espace entre les images séquentielles, et comprenant l'étape consistant à modifier la vitesse du polygone tournant (26) afin de synchroniser la phase dudit indicateur au front avant desdits signaux de début de balayage (SOS) à l'intérieur dudit espace d'images.

3. Procédé selon la revendication 1 ou la revendication 2, comprenant l'étape consistant à déterminer la phase relative entre le front avant des signaux de début de balayage et la détection dudit indicateur qui apparaît avant ledit espace d'images.

4. Procédé selon l'une quelconque des revendications 1 à 3, dans lequel le cadencement de modification de la vitesse du polygone tournant (26) dépend d'un élément parmi
a) la taille de l'indicateur,
b) la distance entre l'indicateur et une image séquentielle suivante, et
c) la distance entre l'indicateur et un raccord d'élément photoconducteur (56).

5. Procédé selon l'une quelconque des revendications précédentes, comprenant en outre l'étape consistant à marquer dans une mémoire le temps entre l'occurrence du front avant de l'indicateur et un front montant se produisant ensuite des signaux de début de balayage.
